Europäisches Patentamt

European Patent Office

Office européen des brevets

(19)

(11) Numéro de publication : **0 111 436**
**B1**

(12) **FASCICULE DE BREVET EUROPÉEN**

(45) Date de publication du fascicule du brevet :
**10.09.86**

(51) Int. Cl.⁴ : **F 02 K   1/06**

(21) Numéro de dépôt : **83402364.0**

(22) Date de dépôt : **07.12.83**

(54) **Tuyère à section variable pour un turboréacteur et avion comportant un tel équipement.**

(30) Priorité : **08.12.82 FR 8220530**

(43) Date de publication de la demande :
**20.06.84 Bulletin 84/25**

(45) Mention de la délivrance du brevet :
**10.09.86 Bulletin 86/37**

(84) Etats contractants désignés :
**DE FR GB SE**

(56) Documents cités :
**FR-A- 1 147 262**
**US-A- 2 593 420**
**US-A- 3 060 681**

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Bayle-Laboure, Gérard Joseph Pascal**
**7 bis, rue Rémy Dumoncel**
**F-77210 Avon (FR)**
Inventeur : **Bouiller, Jean Georges**
**10, rue Kléber**
**F-91800 Brunoy (FR)**
Inventeur : **Buisson, Marc François Bernard**
**120, avenue des Charmettes**
**F-77350 Le Mee Sur Seine (FR)**
Inventeur : **Soligny, Marcel Robert**
**136, Boulevard Jean Mermoz**
**F-94150 Chevilly Larue (FR)**

(74) Mandataire : **Moinat, François**
**S.N.E.C.M.A. Service des Brevets Boîte Postale 81**
**F-91003 Evry Cedex (FR)**

Jouve, 18, rue St-Denis, 75001 Paris, France

## Description

La présente invention concerne un turboréacteur, en particulier du type comportant un système de réchauffe partielle à taux modéré, muni d'une tuyère à section variable et elle concerne également un avion comportant un tel équipement.

On connaît déjà un très grand nombre de types différents de tuyères à section variable, pour les turboréacteurs. Pour les turboréacteurs qui comportent un système de réchauffe à taux élevé, on utilise généralement des tuyères dont la variabilité de la section est obtenue grâce à des volets multiples. Il s'agit cependant de tuyères présentant une structure complexe, comportant plusieurs vérins pour actionner les différents volets, et éventuellement des moyens mécaniques pour synchroniser entre eux les différents volets. Il s'agit donc de réalisations lourdes, coûteuses et de très grand encombrement, qui, en outre, présentent souvent une fiabilité imparfaite, et nécessitent de coûteuses révisions périodiques.

Les tuyères à volets multiples de ce genre conviennent par suite fort mal pour équiper les turboréacteurs qui ne comportent qu'un système de réchauffe partielle à taux modéré, notamment pour des raisons de poids et d'encombrement.

GB-A-1 306 588 décrit une tuyère pour turboréacteur, qui comporte un anneau, lequel est monté coaxialement à la sortie du canal d'amenée des gaz de façon à pouvoir pivoter sur des rampes à profil partiellement sphérique ; des volets multiples commandés chacun par un vérin, sont montés pivotants sur cet anneau, et ils coopèrent de façon à former, dans toute position, la paroi continue d'une tuyère à section variable. Cette réalisation présente pratiquement tous les inconvénients des tuyères à volets multiples, mentionnées précédemment.

FR-A-1 497 418 décrit une tuyère convergente-divergente à section conique variable, du type à aiguille ; elle comporte un corps intérieur biconique, dont notamment la partie divergente est formée par une feuille métallique pliée suivant une surface tronconique, avec recouvrement de ses bords extrêmes, cette feuille pouvant être enroulée et déroulée de façon à faire varier les dimensions du tronc de cône. Il s'agit d'une réalisation très complexe.

Le turboréacteur selon la présente invention est du type indiqué initialement, et il est caractérisé en ce que la tuyère à section variable est constituée essentiellement par un convergent sensiblement tronconique, comportant une demi-coquille fixe, montée dans le prolongement du canal d'amenée des gaz, et une demi-coquille mobile, montée pivotante autour de deux pivots latéraux, alignés suivant un axe diamétral de la sortie dudit canal, et que des moyens sont prévus pour faire pivoter la coquille mobile entre deux positions extrêmes, correspondant respectivement à des ouvertures maximale et minimale du convergent, les deux demi-coquilles étant aménagées de façon à coopérer par leurs bords longitudinaux en assurant l'étanchéité du convergent en toute position de la demi-coquille mobile.

La tuyère à section variable selon la présente invention présente donc une structure particulièrement simple, comprenant un seul élément mobile, à savoir la demi-coquille pivotante, dont les pivotements peuvent être commandés notamment par un vérin unique. Il s'agit donc d'une tuyère particulièrement légère, peu encombrante et extrêmement fiable. Sa simplicité de structure et son faible encombrement permettent notamment de l'adapter à un turboréacteur, qui, par construction, était dépourvu de système de réchauffe, et, par suite, comportait seulement une tuyère à section invariable. En effet, pour pouvoir doter un turboréacteur de ce genre d'un système de réchauffe partielle à taux modéré, il suffit de lui adjoindre une tuyère à section variable selon la présente invention, et un vérin pour commander la demi-coquille pivotante, ces ajouts n'entraînant qu'une faible augmentation du poids total du turboréacteur et de sa tuyère et un très faible accroissement de son encombrement. Cette transformation avantageuse d'un turboréacteur sans réchauffe est rendue possible à peu de frais grâce à la présente invention.

Dans une forme de réalisation préférée du turboréacteur selon la présente invention, le bord amont de la demi-coquille mobile est aménagé de façon à coopérer avec la partie correspondante du bord de la sortie du canal, en assurant l'étanchéité en toute position de ladite demi-coquille mobile, par exemple grâce au fait que le bord amont de cette dernière comporte intérieurement une portée sphérique, adaptée pour coopérer avec un joint d'étanchéité fixé extérieurement sur le bord de ladite sortie. D'autre part, les bords longitudinaux des deux demi-coquilles se recouvrent mutuellement par des parties planes, adaptées pour coopérer par l'intermédiaire de joints longitudinaux d'étanchéité, fixés auxdits bords de l'une des demi-coquilles, de façon à assurer l'étanchéité du convergent en toute position de la demi-coquille mobile.

Alors que dans le cas de la plupart des tuyères à section variable, antérieurement connues, les variations de la section, obtenues par exemple par des mouvements synchronisés de multiples volets pivotants, n'affectent pratiquement pas la direction de la poussée du réacteur, qui reste généralement toujours dirigée suivant son axe longitudinal. Dans le cas par contre d'un turboréacteur muni d'une tuyère à section variable selon la présente invention, le déplacement de la demi-coquille mobile par rapport à la demi-coquille fixe fait apparaître une petite composante de la poussée du réacteur, perpendiculaire à l'axe longitudinal de ce dernier, cette composante ayant évidemment sa valeur maximale lorsque la demi-coquille mobile de la tuyère se trouve dans l'une de ses deux positions extrêmes, généralement dans sa position d'ouverture maximale.

Par suite, dans le cas d'un avion comportant un seul turboréacteur, disposé sensiblement dans le plan longitudinal de symétrie de l'avion, et muni d'une tuyère selon la présente invention, les pivots de la demi-coquille mobile de ladite tuyère sont de préférence disposés suivant un axe perpendiculaire au plan de symétrie de l'avion. Grâce à cette disposition selon la présente invention, la composante transversale de la poussée du réacteur qui apparaît lors des déplacements de la coquille mobile de la tuyère peut être aisément compensée par le pilote en agissant sur les gouvernes de profondeur de l'avion, de façon à éviter tout changement d'assiette de l'avion. Inversement, le pilote peut modifier l'assiette de l'avion sans actionner ses gouvernes correspondantes, simplement en faisant varier la section de la tuyère, par l'action du vérin correspondant, de façon à faire apparaître une composante transversale de la poussée du réacteur.

Selon une autre disposition de l'invention, les pivots de la demi-coquille mobile de la tuyère sont disposés suivant un axe situé dans un plan parallèle au plan de symétrie de l'avion. Cette disposition fournit un moyen pour modifier la direction de l'avion.

Par contre, dans le cas d'un avion comportant au moins une paire de turboréacteurs, disposés symétriquement par rapport au plan longitudinal de symétrie de l'avion, et munis chacun d'une tuyère selon la présente invention, les pivots des demi-coquilles mobiles de deux tuyères sont disposés de préférence respectivement suivant deux axes parallèles au plan de symétrie de l'avion, les deux demi-coquilles mobiles étant toutes deux disposées, soit du côté du plan de symétrie de l'avion, soit du côté opposé. On comprend en effet que, avec cette disposition, les variations concomitantes des sections respectives des tuyères se traduisent par l'apparition de composantes transversales des poussées respectives de deux réacteurs, qui sont respectivement égales et de sens opposés, si bien qu'elles se compensent, et que, l'avion n'étant soumis qu'aux composantes axiales des deux poussées, ni sa direction ni son assiette ne se trouvent modifiées. Par contre, avec cette disposition selon la présente invention, le pilote peut modifier légèrement la direction de l'avion sans actionner les gouvernes correspondantes, simplement en modifiant les ouvertures des deux tuyères de façon dissymétrique, l'une des deux tuyères étant maintenue par exemple à son ouverture minimale, et l'autre tuyère amenée à son ouverture maximale.

A titre d'exemple, on a décrit ci-dessous et illustré schématiquement au dessin annexé, une forme de réalisation d'une tuyère à section variable selon la présente invention.

La figure 1 est une vue en coupe axiale d'une tuyère selon la présente invention, montée à la sortie d'un turboréacteur.

La figure 2 est une vue schématique, en perspective, de la tuyère représentée sur la figure 1.

La figure 3 est une vue en coupe suivant la ligne III-III de la figure 1.

La figure 4 est une vue schématique, en plan, d'un avion comportant une paire de turboréacteurs, munis chacun d'une tuyère selon la présente invention.

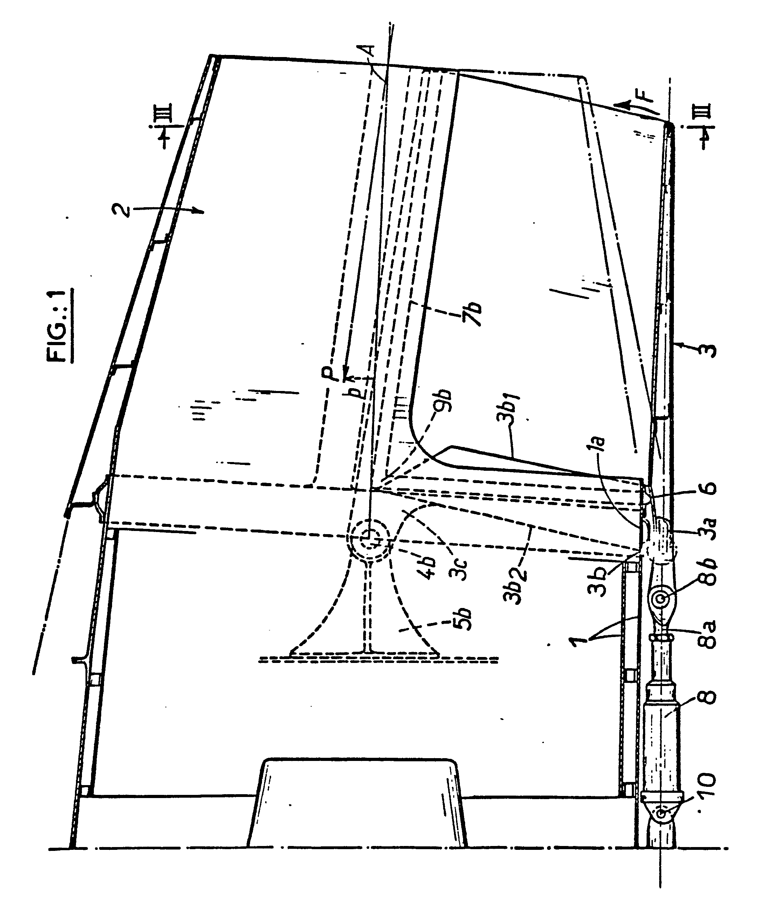

Sur les figures 1 à 3 du dessin annexé, 1 désigne la double paroi du canal de sortie d'un turboréacteur (non représenté), qui amène les gaz chauds à la tuyère qui va être décrite ci-après.

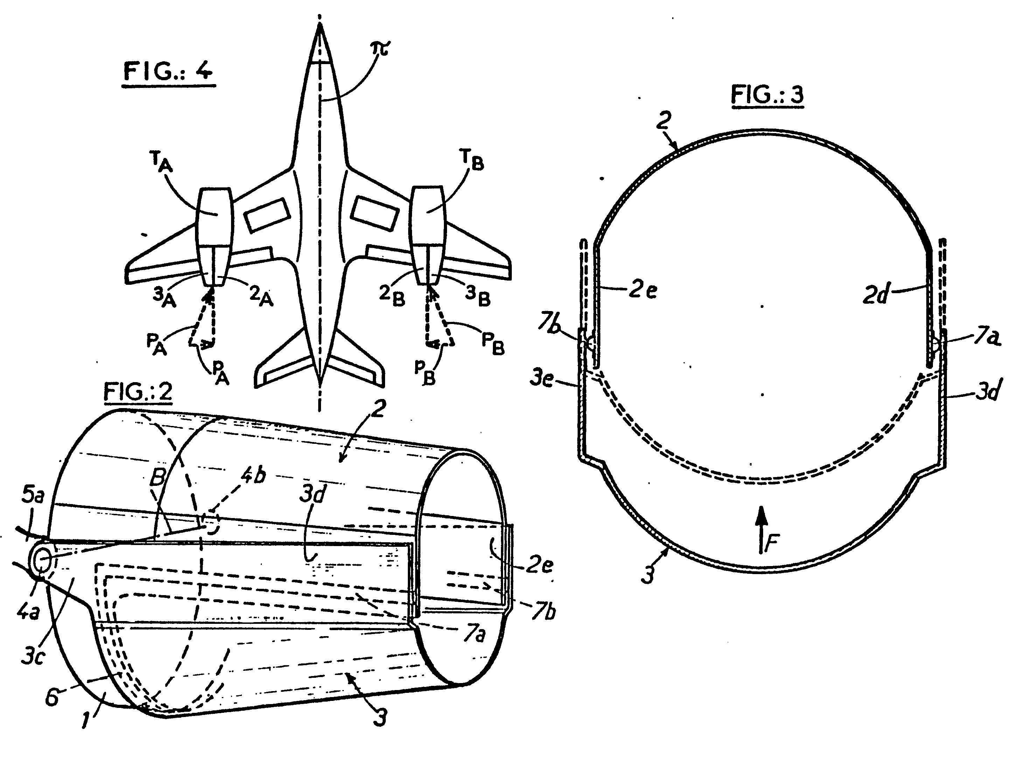

La tuyère selon la présente invention est constituée essentiellement par un convergent sensiblement tronconique, dont l'axe A est aligné avec, ou bien faiblement incliné sur l'axe du turboréacteur (non représenté) ; ce convergent tronconique comporte une demi-coquille fixe 2 qui est montée dans le prolongement du canal d'amenée des gaz 1 et une demi-coquille mobile 3 qui est montée pivotante autour de deux pivots latéraux 4a et 4b, ces deux pivots latéraux étant alignés suivant un axe diamétral B (figure 2) de la sortie du canal 1.

Dans la forme de réalisation considérée de l'invention, le bord amont 3a de la coquille mobile 3 est aménagé de façon à coopérer avec la partie correspondante du bord de la sortie du canal 1 en assurant l'étanchéité en toute position de ladite demi-coquille 3 ; comme on le voit notamment à la partie inférieure de la figure 1, le bord amont 3a de la demi-coquille 3 enveloppe la partie correspondante 1a du bord de la sortie du canal 1 et il comporte intérieurement une portée sphérique 3b dont on a désigné respectivement les bords aval et amont par 3b1 et 3b2 ; cette portée sphérique 3b qui enveloppe la partie 1a du bord de la sortie du canal 1 sur un peu moins de 180 degrés, a ses extrémités qui sont raccordées respectivement aux pivots 4a et 4b par des prolongements en forme de pattes, telles que 3c sur les figures 1 et 2. Les pivots 4a et 4b sont eux mêmes portés par des supports 5a et 5b qui sont fixés à l'extérieur de la paroi du canal de sortie 1 près de son bord aval et qui épanouissent périphériquement dans le canal les efforts introduits par la coquille mobile 3 dans les pivots 4a et 4b.

Par ailleurs, un joint d'étanchéité 6 est fixé extérieurement près du bord du canal de sortie 1 de manière à coopérer avec la portée sphérique 3b dont est pourvue la partie correspondante 3a de la demi-coquille mobile 3 en toute position de cette dernière. Bien entendu, le joint 6 peut être prévu seulement sur la moitié inférieure du bord de sortie du canal, de façon à s'étendre environ sur 180 degrés et dans la solution représentée, il est assez nettement en aval du plan transversal contenant les pivots 4a et 4b.

Comme visible sur la vue en coupe de la figure 3, les bords longitudinaux des deux demi-coquilles 2 et 3 se recouvrent mutuellement par des parties planes 2d et 3d, 2e et 3e adaptées pour coopérer par l'intermédiaire de joints longitudinaux d'étanchéité tels que 7a et 7b (en pointillés sur les figures 1 et 2), qui sont fixés aux bords de l'une des demi-coquilles, de façon à assurer l'étanchéité du convergent en toute position de la demi-coquille mobile 3. Dans la forme de réalisa- .

tion illustrée sur la figure 3, c'est chaque bord longitudinal plat 3d ou 3e de la demi-coquille mobile 3, qui recouvre extérieurement le bord longitudinal plat 2d ou 2e de la demi-coquille fixe 2 et le joint longitudinal 7a ou 7b est fixé extérieurement sur ledit bord plat 2d ou 2e.

Un vérin 8 est monté en dessous de la partie inférieure du canal 1 ; le corps de ce vérin est articulé en 10 à un support fixé sur le canal en amont du bord 3a de la coquille mobile et l'extrémité aval de la tige 8a de ce vérin est articulée en 8b au bord amont 3a de la coquille mobile. Bien entendu, on laissera entre corps de vérin et canal 1 un jeu suffisant pour permettre le débattement du vérin, entre la position plein fermé et plein ouvert de la coquille et préférablement, pour réduire les risques d'efforts transversaux sur la partie mobile du vérin en cas de tolérances de position ou de déformation, les articulations 8b et 10 comporteront des rotules.

Le fonctionnement de la tuyère selon la présente invention, qui vient d'être décrite, est le suivant.

Lorsque la tige 8a du vérin 8 est dans sa position de rétraction complète, représentée sur la figure 1, la demi-coquille mobile 3 occupe la position représentée en traits pleins sur la même figure, position qui correspond à l'ouverture maximale de la tuyère. Les gaz chauds amenés par le canal 1 dans la tuyère ne peuvent s'échapper de celle-ci que par son ouverture aval, en raison de l'étanchéité assurée, d'une part, par le contrat de la portée sphérique 3b de la demi-coquille 3 au voisinage de son bord 3b1 avec le joint semi-circulaire 6 et, d'autre part, par les joints longitudinaux 7a et 7b interposés entre les bords longitudinaux plats 2d et 3d, 2e et 3e des deux demi-coquilles 2 et 3 comme représenté en traits pleins sur la figure 3.

Lorsque la section de la tuyère doit être réduite, le vérin 8 est alimenté de façon que sa tige 8a, en sortant davantage du corps dudit vérin, déplace le bord amont 3a de la coquille mobile vers l'aval, ce qui entraîne le pivotement de la demi-coquille mobile 3 autour de ses deux pivots 4a et 4b dans le sens de la flèche F indiquée sur les figures 1 et 3 ; sur ces deux figures, on a également indiqué en traits interrompus la position extrême de la demi-coquille mobile 3, correspondant à l'ouverture minimale de la tuyère, pour laquelle, dans la forme de réalisation considérée, le convergent formé par les demi-coquilles 2 et 3 a exactement la forme d'un tronc de cône de révolution d'axe A. Au cours du mouvement de pivotement de la demi-coquille mobile 3 autour de ses pivots 4a et 4b l'étanchéité de la tuyère ne cesse pas d'être assurée au niveau du joint semi-circulaire 6 grâce au fait que la portée sphérique 3b de la demi-coquille mobile 3 reste appliquée contre ledit joint semi-circulaire 6 en tous les points de celui-ci, c'est-à-dire sur un peu moins de 180 degrés, la ligne ou la bande étroite de contact entre le joint 6 et la portée sphérique 3b se déplaçant progressivement depuis le bord 3b1 de ladite portée sphérique 3b jusqu'au voisinage de son bord 3b2 pour la position d'ouverture minimale de la tuyère. De même, l'étanchéité de la tuyère ne cesse pas d'être assurée, pendant le mouvement de pivotement de la demi-coquille mobile 3 au niveau des joints longitudinaux 7a et 7b puisque, comme visible sur la figure 3 lors du pivotement de la demi-coquille mobile 3 dans le sens de la flèche F, chaque bord plat 3d ou 3e de celle-ci se déplace vers le haut, sans cesser d'être en contact étanche avec le joint 7a ou 7b, la ligne ou la bande étroite de contact avec ledit joint 7a ou 7b se déplaçant seulement de la position visible sur la figure 3 vers une position plus proche de la partie incurvée de la demi-coquille 3. De préférence, les extrémités amont des joints longitudinaux 7a et 7b sont réunies sans solution de continuité aux extrémités correspondantes du joint semi-circulaire 6, comme indiqué en 9b sur la figure 1, de façon à obtenir une étanchéité satisfaisante pour toutes les positions de la demi-coquille mobile 3 entre ses deux positions extrêmes mentionnées.

Comme on l'a indiqué précédemment, la tuyère 2-3 ne présente une symétrie de révolution autour de l'axe A que dans sa position d'ouverture minimale, pour laquelle la demi-coquille mobile 3 occupe la position indiquée en traits interrompus. Pour toute position de la demi-coquille mobile 3 correspondant à une plus grande ouverture de la tuyère, celle-ci ne présente plus une symétrie de révolution autour de l'axe A si bien que la poussée produite par le turboréacteur, équipé de cette tuyère selon la présente invention, présente une direction P légèrement inclinée sur l'axe de symétrie A ; dans l'exemple illustré sur la figure 1, la poussée P se trouve dans le plan de la figure 1, et, pour la position d'ouverture maximale de la demi-coquille mobile 3, elle présente une petite composante p transversale, c'est-à-dire perpendiculaire à l'axe A et par conséquent perpendiculaire à l'axe des pivots 4a et 4b, cette composante de poussée transversale p étant dirigée à l'opposé de la demi-coquille mobile 3.

Dans une solution préférée, l'axe des pivots 4a et 4b est perpendiculaire au plan longitudinal de symétrie de l'avion, la composante transversale p de la poussée p produite par le réacteur en position d'ouverture de la tuyère est située dans ledit plan de symétrie et dirigée vers le haut ou vers le bas selon que la demi-coquille mobile de ladite tuyère se trouve au-dessous ou au-dessus de l'axe A (figure 1), et il est alors toujours possible de compenser l'effet de ladite composante transversale p sur l'assiette de l'avion en actionnant dans un sens convenable ses gouvernes de profondeur.

Bien entendu, l'apparition de la composante transversale p de la poussée p du réacteur lorsque le vérin 8 produit une augmentation de l'ouverture de la tuyère selon la présente invention peut être mise à profit par le pilote pour modifier l'assiette de l'avion sans actionner ses gouvernes correspondantes ou pour augmenter l'effet de ses gouvernes.

Comme indiqué plus haut, et notamment dans le cas d'un monoréacteur, il est préférable que l'axe des pivots 4a et 4b soit perpendiculaire au plan de symétrie de l'avion. On ne sortirait pas bien entendu du cadre de l'invention avec un axe des pivots parallèle au plan de symétrie de l'avion (ou dans une position intermédiaire) si on veut mettre à profit la composante de la poussée — ou son absence — pour modifier la « direction » de l'avion sans action sur la gouverne de direction (ou avec une action diminuée sur cette gouverne). Pour un monoréacteur par exemple, la tuyère en position fermée sera légèrement déviée d'un côté de l'avion, de manière à ce que la poussée soit approximativement dans la direction symétrique par rapport à l'axe de l'avion, de la direction qu'aura la poussée, dans la position où la coquille 3 est ouverte.

Pour un biréacteur par exemple, on se reportera à la figure 4 qui est une vue schématique, en plan, d'un avion comportant une paire de turboréacteurs $T_A$ et $T_B$ qui sont disposés symétriquement par rapport au plan longitudinal de symétrie $\pi$ de l'avion ; chacun des turboréacteurs $T_A$ et $T_B$ est équipé d'une tuyère selon la présente invention, par exemple du type précédemment décrit à l'aide des figures 1 à 3, les pivots de leurs demi-coquilles mobiles $3_A$ et $3_B$ étant disposés respectivement suivant des axes parallèles au plan de symétrie $\pi$ de l'avion, et les deux demi-coquilles mobiles $3_A$ et $3_B$ étant toutes deux disposées du côté opposé au plan de symétrie $\pi$. On comprend que, avec cette disposition, lorsque les deux tuyères sont également ouvertes, c'est-à-dire généralement toutes deux ouvertes ou toutes deux fermées, les réacteurs $T_A$ et $T_B$ produisent respectivement des poussées $P_A$ et $P_B$ qui sont également inclinées sur le plan de symétrie $\pi$ leurs composantes transversales respectives $p_A$ et $p_B$ étant par ailleurs toutes deux de sens contraire, si bien que leurs effets respectifs sur le cap de l'avion s'annulent ; cette disposition dispense donc le pilote de l'avion de compenser les composantes transversales $p_A$ et $p_B$ des poussées des réacteurs en agissant sur les commandes de direction de l'avion. Cependant, le pilote de l'avion a la possibilité supplémentaire de régler différemment les ouvertures respectives des deux tuyères, de manière à donner des intensités différentes à leurs composantes transversales respectives ; dans ces conditions, la résultante des composantes transversales, inégales, n'est plus nulle, et elle applique à l'avion un couple qui tend à modifier son cap. Le pilote peut donc avoir recours à cette disposition pour produire des changements rapides de direction de l'avion sans actionner ses gouvernes correspondantes. Des résultats équivalents seraient obtenus si les positions respectives des demi-coquilles fixes $2_A$ et $2_B$ et des demi-coquilles mobiles $3_A$ et $3_B$ étaient échangées, les composantes transversales $p_A$ et $p_B$ ayant alors seulement des sens opposés à ceux visibles sur la figure 4.

La présente invention n'est pas limitée aux formes de réalisation précédemment décrites. Elle englobe toutes leurs variantes. Au lieu d'être fixés aux bords longitudinaux plats 2d ou 2e de la demi-coquille fixe 2, les joints longitudinaux 7a et 7b pourraient être fixés sur les bords longitudinaux plats 3d ou 3e de la demi-coquille mobile 3. Au lieu d'être extérieurs aux bords longitudinaux plats 2d ou 2e de la demi-coquille fixe 2, les bords longitudinaux plats 3d ou 3e de la demi-coquille mobile 3 pourraient être disposés à l'intérieur de ladite demi-coquille fixe 2. La réalisation des moyens pour faire pivoter la coquille mobile 3 entre ses deux positions extrêmes est matière à option. La portée sphérique 3b (figure 1), au lieu d'être concave et portée par le bord amont de la demi-coquille mobile 3, pourrait être convexe et fixée autour de la moitié inférieure du bord 1a du canal de sortie 1, de façon à coopérer avec un joint demi-circulaire qui serait alors solidaire du bord amont correspondant de ladite demi-coquille mobile 3.

**Revendications**

1. Turboréacteur, en particulier du type comportant un système de réchauffe partielle à taux modéré, muni d'une tuyère à section variable, caractérisé en ce que la tuyère à section variable est constituée essentiellement par un convergent sensiblement tronconique, comportant une demi-coquille fixe (2), montée dans le prolongement du canal d'amenée (1) des gaz, et une demi-coquille mobile (3), montée pivotante autour de deux pivots latéraux (4a, 4b), alignés suivant un axe diamétral (B) de la sortie (1a) dudit canal (1), et que des moyens (8) sont prévus pour faire pivoter la demi-coquille mobile (3) entre deux positions extrêmes, correspondant respectivement à des ouvertures maximale et minimale du convergent, les deux demi-coquilles (2 et 3) étant aménagées de façon à coopérer par leurs bords longitudinaux (2d, 3d ; 2e, 3e) en assurant l'étanchéité dudit convergent en toute position de la demi-coquille mobile (3).

2. Turboréacteur selon la revendication 1, caractérisée en ce que le bord amont (3a) de la demi-coquille mobile (3) est aménagé de façon à coopérer avec la partie correspondante du bord de la sortie (1a) du canal (1) en assurant l'étanchéité en toute position de ladite demi-coquille mobile (3).

3. Turboréacteur selon la revendication 2, caractérisée en ce que le bord amont (3a) de la demi-coquille mobile (3) enveloppe la partie correspondante du bord de la sortie (1a) du canal (1), et comporte intérieurement une portée sphérique (3b), adaptée pour coopérer avec un joint d'étanchéité (6) fixé extérieurement sur le bord de ladite sortie (1a).

4. Tuyère montée sur un turboréacteur selon l'une quelconque des revendications 1 à 3, caractérisée en ce que les bords longitudinaux des deux demi-coquilles (2 et 3) se recouvrent mutuellement par des parties planes (2d, 3d ; 2e, 3e), adaptées pour coopérer, par l'intermédiaire de joints longitudinaux d'étanchéité (7a, 7b), fixés auxdits bords de l'une des demi-coquilles (2 et 3), de façon à assurer l'étanchéité du convergent en toute position de la demi-coquille mobile (3).

5. Tuyère selon la revendication 4, caractérisée en ce que les bords longitudinaux plats (3d, 3e) de la demi-coquille mobile (3) recouvrent extérieurement les bords longitudinaux plats (2d, 2e) de la demi-coquille fixe (2), sur lesquels sont fixés extérieurement les joints longitudinaux (7a, 7b).

6. Avion comportant un seul turboréacteur selon l'une quelconque des revendications 1 à 5, disposé sensiblement dans le plan longitudinal de symétrie de l'avion caractérisé en ce que les pivots (4a, 4b) de la demi-coquille mobile (3) de la tuyère sont disposés suivant un axe (B) perpendiculaire au plan de symétrie de l'avion.

7. Avion comportant un seul turboréacteur selon l'une quelconque des revendications 1 à 5, disposé sensiblement dans le plan longitudinal de symétrie de l'avion caractérisé en ce que les pivots (4a, 4b) de la demi-coquille mobile (3) de la tuyère sont disposés suivant un axe (B) situé dans un plan parallèle au plan de symétrie de l'avion.

8. Avion comportant au moins une paire de turboréacteurs ($T_A$, $T_B$) selon l'une quelconque des revendications 1 à 5, disposés symétriquement par rapport au plan longitudinal de symétrie ($\pi$) de l'avion, caractérisé en ce que les pivots (4a, 4b) des demi-coquilles mobiles ($3_A$, $3_B$) des deux tuyères sont disposés respectivement suivant deux axes parallèles au plan de symétrie ($\pi$) de l'avion, et que les deux demi-coquilles mobiles ($3_A$, $3_B$) sont toutes deux disposées, soit du côté du plan de symétrie ($\pi$) de l'avion, soit du côté opposé.

**Claims**

1. Turbo jet engine, in particular of the type comprising a partial re-heat system of moderate output, provided with a nozzle of variable section, characterized in this that the nozzle of variable section is constituted essentially by a substantially frusto-conical convergent portion, comprising a fixed half shell (2), mounted in the extension of the duct (1) for the delivery of the gases, and a movable half shell (3), pivotally mounted about two lateral pivots (4a, 4b), aligned upon a diametral axis (B) of the outlet (1a) of the said duct (1), and that means (8) are provided to cause the movable half shell (3) to pivot between two end positions, respectively corresponding to maximum and minimum openings of the convergent portion, the two half shells (2 and 3) being arranged in such a manner as to cooperate at their longitudinal edges (2d, 3d ; 2e, 3e) whilst providing for fluid-tightness of the said convergent portion in all positions of the movable half shell (3).

2. Turbo jet engine according to claim 1, characterized in that the upstream edge (3a) of the movable half shell (3) is arranged in such a manner as to cooperate with the corresponding part of the edge of the outlet (1a) of the duct (1) while providing for fluid-tightness in any position of the said movable half shell (3).

3. Turbo jet engine according to claim 2, characterized in this that the upstream edge (3a) of the movable half shell (3) surrounds the corresponding part of the edge of the outlet (1a) of the duct (1), and comprises internally a spherical seating (3b), adapted to cooperate with a fluid-tight seal (6) secured externally on the edge of the said outlet (1a).

4. Nozzle mounted on a turbo jet engine according to any one of claims 1 to 3, characterized in that the longitudinal edges of the two half shells (2 and 3) mutually cover one another at plane parts (2d, 3d ; 2e, 3e), adapted to cooperate, through the intermediary of longitudinal fluid-tight seals (7a, 7b), secured to the said edges of one of the half shells (2 and 3), in such a manner as to provide for fluid-tightness of the convergent portion in all positions of the movable half shell (3).

5. Nozzle according to claim 4, characterized in that the longitudinal flat edges (3d, 3e) of the movable half shell (3) cover externally the longitudinal flat edges (2d, 2e) of the fixed half shell (2), on which are secured externally the longitudinal seals (7a, 7b).

6. Aircraft comprising a single turbo reactor according to any one of claims 1 to 5, disposed substantially in the longitudinal plane of symmetry of the aircraft characterized in this that the pivots (4a, 4b) of the movable half shell (3) of the nozzle are disposed on an axis (B) perpendicular to the plane of symmetry of the aircraft.

7. Aircraft comprising a single turbo reactor according to any one of claims 1 to 5, disposed substantially in the longitudinal plane of symmetry of the aircraft characterized in this that the pivots (4a, 4b) of the movable half shell (3) of the nozzle are disposed on an axis (B) disposed in a plane parallel to the plane of symmetry of the aircraft.

8. Aircraft comprising at least one pair of turbo jet engines ($T_A$, $T_B$) according to any one of claims 1 to 5, disposed symmetrically with respect to the longitudinal plane of symmetry ($\pi$) of the aircraft, characterized in that the pivots (4a, 4b) of the movable half shells ($3_A$, $3_B$) of the two nozzles are disposed respectively on two axes parallel to the plane of symmetry ($\pi$) of the aircraft, and that the two movable half shells ($3_A$, $3_B$) are both disposed either on the side of the plane of symmetry ($\pi$) of the aircraft, or on the opposite side.

**Patentansprüche**

1. Turbinenluftstrahltriebwerk, insbesondere mit einem System zum partiellen schwachen Vorwärmen, umfassend eine Düse mit einem veränderbaren Querschnitt, dadurch gekennzeichnet, daß die Düse mit dem veränderbaren Querschnitt im wesentlichen eine konvergierend verlaufende Kegelstumpfform aufweist, umfassend eine feste Halbschale (2), die an der Verlängerung des Gaszuleitungskanals (1) angeordnet ist, und eine bewegliche Halbschale (3), die um zwei Querzapfen (4a, 4b) schwenkbar angeordnet ist, welche längs einer Achse (B) ausgerichtet sind, die diametral zum Ausgang (1a) des betreffenden Kanals (1) verläuft, und daß Einrichtungen (8) vorgesehen sind, welche die bewegliche Halbschale (3) zwischen zwei extremen Stellungen schwenken lassen, die den maximalen und minimalen Öffnungen konvergierenden Bereiches entsprechen, wobei die beiden Halbschalen (2 und 3) derart angeordnet sind, daß sie mit ihren Längsrändern (2d, 3d ; 2e, 3e) zusammenwirken hinsichtlich der Gewährleistung der Dichtigkeit des konvergierenden Bereiches in jeder Stellung der beweglichen Halbschale (3).

2. Turbinenluftstrahltriebwerk nach Anspruch 1, dadurch gekennzeichnet, daß der auf der Stromaufwärtsseite liegende Rand (3a) der beweglichen Halbschale (3) derart angeordnet ist, daß er mit dem entsprechenden Teil des Randes am Ausgang (1a) des Kanals (1) zusammenwirkt, um die Dichtigkeit in jeder Position der betreffenden beweglichen Halbschale (3) sicherzustellen.

3. Turbinenluftstrahltriebwerk nach Anspruch 2, dadurch gekennzeichnet, daß der auf der Stromaufwärtsseite liegende Rand (3a) der beweglichen Halbschale (3) den dem Rand des Ausgangs (1a) des Kanals (1) entsprechenden Teil umschließt und im Innern einen kugelförmigen Lagerzapfen (3b) aufweist, der mit einem Dichtungsverbindungsstück (6) zusammenzuwirken vermag, welches auf der Außenseite am Rand des genannten Ausgangs (1a) befestigt ist.

4. Düse, die an einem Turbinenluftstrahltriebwerk nach einem der Ansprüche 1 bis 3 angebracht ist, dadurch gekennzeichnet, daß die Längsränder der beiden Halbschalen (2 und 3), die sich durch flache Teile (2d, 3d ; 2e, 3e) gegenseitig überlappen, mit Dichtungs-Längsverbindungsgliedern (7a, 7b) zusammenzuwirken vermögen, die an den betreffenden Rändern einer der Halbschalen (2 und 3) befestigt sind, derart, daß die Dichtheit des konvergierenden Bereiches in jeder Position der beweglichen Halbschale (3) gewährleistet ist.

5. Düse nach Anspruch 4, dadurch gekennzeichnet, daß die flachen Längsränder (3d, 3e) der beweglichen Halbschale (3) die flachen Längsränder (2d, 2e) der unbeweglichen Halbschale (2) überlappen, an denen auf der Außenseite die Längsverbindungsglieder (7a, 7b) befestigt sind.

6. Flugzeug mit einem einzigen Turbinenluftstrahltriebwerk nach einem der Ansprüche 1 bis 5, welches klar in der Längssymmetrieebene des Flugzeugs angeordnet ist, dadurch gekennzeichnet, daß die Drehzapfen (4a, 4b) der beweglichen Halbschale (3) und der Düse längs einer Achse (B) angeordnet sind, die rechtwinklig zur Symmetrieebene des Flugzeugs verläuft.

7. Flugzeug mit einem einzigen Turbinenluftstrahltriebwerk nach einem der Ansprüche 1 bis 5, welches klar in der Längssymmetrieebene des Flugzeugs angeordnet ist, dadurch gekennzeichnet, daß die Drehzapfen (4a, 4b) der beweglichen Halbschale (3) und der Düse längs einer Achse (B) angeordnet sind, die in einer parallel zur Symmetrieebene des Flugzeugs verlaufenden Ebene liegt.

8. Flugzeug mit mindestens einem Paar von Turbinenluftstrahltriebwerken ($T_A$, $T_B$) gemäß einem der Ansprüche 1 bis 5, die symmetrisch in bezug auf die Längssymmetrieebene ($\pi$) des Flugzeugs angeordnet sind, dadurch gekennzeichnet, daß die Drehzapfen (4a, 4b) der beweglichen Halbschalen ($3_A$, $3_B$) der beiden Düsen längs zweier Achsen angeordnet sind, die parallel zur Symmetrieebene ($\pi$) des Flugzeugs verlaufen, und daß die beiden beweglichen Halbschalen ($3_A$, $3_B$) entweder auf der Seite zur Symmetrieebene ($\pi$) des Flugzeugs oder auf der gegenüberliegenden Seite angeordnet sind.

FIG.: 1

FIG.: 4

FIG.: 3

FIG.: 2

0 111 436